# EUROPÄISCHE PATENTANMELDUNG

(11) **EP 0 818 486 A1**
(43) Veröffentlichungstag der Anmeldung: **14.01.1998**
(21) Anmeldenummer: 97107995.9
(22) Anmeldetag: 16.05.1997
(51) Int. Cl.: C08G 18/80, C08G 18/58

(54) **Pulverförmige Verbindungen, ein Verfahren zu ihrer Herstellung sowie deren Verwendung**

(30) Priorität: 11.07.1996 DE 19627951
(71) Anmelder: HÜLS AKTIENGESELLSCHAFT, 45764 Marl (DE)
(72) Erfinder: Wenning, Andreas, Dr., 48301 Nottuln (DE); Schmitt, Felix, Dr., 45701 Herten (DE)

(57) **Zusammenfassung**

Pulverförmige Verbindungen mit ausgezeichneter Temperatur- und Lösemittelbeständigkeit auf der Basis von 1,2-Epoxidverbindungen mit mehr als einer 1,2-Epoxidgruppe und einer oder mehreren Hydroxylgruppen im Molekül, Härtungsmitteln und die in der Klebstofftechnologie üblichen Hilfs- und Zusatzmittel, dadurch gekennzeichnet, daß als Härtungsmittel mit inerten Blockierungsmitteln und cyclischen Amidinen der allgemeinen Formel I und/oder II 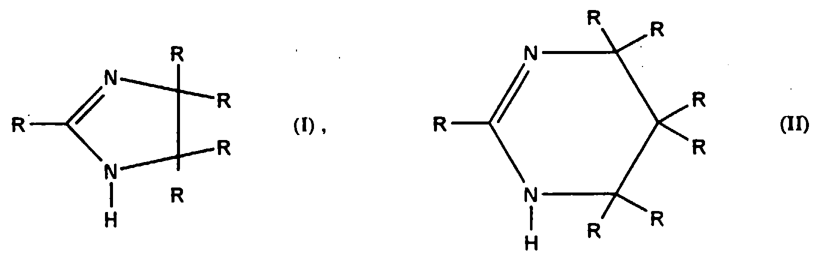 blockierte Polyisocyanate enthalten sind, worin R Wasserstoff oder gleiche oder verschiedene Alkyl-, Cycloalkylreste mit 1 bis 10 C-Atomen, Aralkyl oder Arylreste bedeuten, und wobei bei einem OH:NCO-Verhältnis von 1:0,1 bis 1:1, vorzugsweise 1:0,3 bis 1:1, der Gehalt an cyclischem Amidin in gebundener Form 2 bis 9 Massen-%, vorzugsweise 3 bis 8 Massen-%, bezogen auf das eingesetzte Epoxidharz, beträgt, und der Härter pro NCO-Gruppe 0,9 bis 0,3 Mole inerte Blockierungsmittel und 0,1 bis 0,6 Mole cyclische Amidine enthält.

Ferner betrifft die Erfindung die Herstellung dieser pulverförmigen Verbindungen und deren Verwendung als Einkomponenten-Klebstoffe.

## Beschreibung

Die vorliegende Erfindung betrifft cyclische Amidine und andere Blockierungsmittel enthaltende Verbindungen, ein Verfahren zu ihrer Herstellung sowie deren Verwendung in einkomponentigen Klebstoffsystemen.

Die große Reaktionsfähigkeit der Epoxidgruppe ermöglicht die Härtung mit "stöchiometrischen" Mengen eines Reaktionspartners oder mit Katalysatoren. Bei der Härtung mit "stöchiometrischen" Mengen werden Harz und Härter über eine chemische Bindung miteinander verknüpft.

Eine direkte Verknüpfung der Epoxidharzmoleküle untereinander charakterisiert die katalytische Härtung. Dabei entsteht eine Vernetzung der Epoxidharzmoleküle über Ethergruppierungen. Sie wird über Polymerisationskatalysatoren, wie z. B. starke Basen, tert. Amine, Metallsalze oder Friedel-Crafts-Katalysatoren, initiiert. So wird z B. in der DE-OS 27 31 335 ein Verfahren zur Härtung von 1,2-Epoxidverbindungen mit cyclischen Amidinen beschrieben. Ein weiteres, in ca. 50 % aller wärmehärtenden Epoxid-Systeme verwendetes Härtersystem für Epoxidharze bildet das beschleunigte Dicyandiamid. Einkomponentige Klebstoffe auf dieser Basis verfolgen das Ziel, bei Raumtemperatur äußerst gute Zugscherfestigkeiten bei Metallverklebungen zu erreichen. Ab Temperaturen von etwa 80 - 100 °C fallen diese Werte jedoch dramatisch ab.

In der DE-OS 36 10 758 werden erstmals pulverförmige Überzugsmittel auf Basis von EP-Härtern beschrieben, die Bisphenol-A-Epoxidharze durch die Polymerisation ihrer Epoxidgruppen und zusätzlich durch die Umsetzung ihrer Hydroxylfunktionen zur Aushärtung bringen. Die so hergestellten einkomponentigen Beschichtungen zeichnen sich durch sehr gute lacktechnische Eigenschaften und eine hervorragende Lösungsmittelbeständigkeit aus. Das Schwergewicht dieser Systeme liegt jedoch in der Pulverlackanwendung, da die Pulver der DE-OS 36 10 758 aufgrund ihrer schlechten Zugscherfestigkeiten bei erhöhten Temperaturen (DIN EN 1465) zum Verkleben von Metallen nicht gut geeignet sind.

In der DE 195 49 029 werden cyclische Amidin- und Uretdiongruppen enthaltende Verbindungen beschrieben, die als Epoxid-Härter zum Verkleben von Metallen geeignet sind. Die Verklebungen weisen sehr gute Lösemittelbeständigkeiten auf Allerdings sind aufgrund der zum Ablauf der Urethan-Vernetzungsreaktion erforderlichen Aufspaltung der Uretdiongruppen relativ hohe Härtungstemperaturen nötig.

Die der Erfindung zugrunde liegende Aufgabe bestand daher darin, einkomponentige Klebstoffsysteme zu entwickeln, die nach der Härtung Verklebungen mit sehr guten Temperatur- und Lösemittelbeständigkeiten ergeben.

Überraschenderweise konnte diese Aufgabe mit der Bereitstellung der nachstehend näher beschriebenen erfindungsgemäßen Harz/Härter-Mischung, die als Härtungsmittel mit cyclischen Amidinen und anderen inerten Blockierungsmitteln blockierte Polyisocyanate enthalten, gelöst werden.

Gegenstand der vorliegenden Erfindung sind somit pulverförmige Verbindungen mit ausgezeichneter Temperatur- und Lösemittel-beständigkeit auf der Basis von 1,2-Epoxidverbindungen mit mehr als einer 1,2-Epoxidgruppe und einer oder mehreren Hydroxylgruppen im Molekül, Härtungsmitteln und die in der Klebstofftechnologie üblichen Hilfs- und Zusatzmittel, dadurch gekennzeichnet, daß als Härtungsmittel mit inerten Blockierungsmitteln und cyclischen Amidinen der allgemeinen Formel I und/oder II 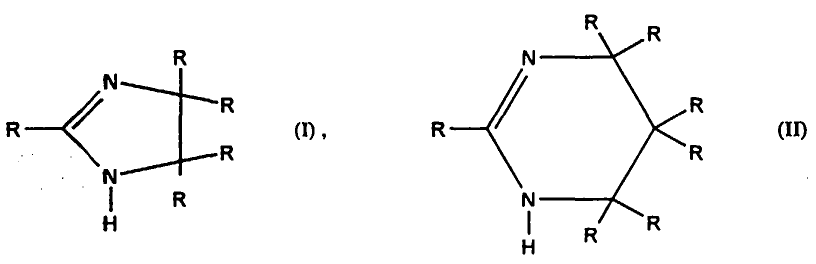 blockierte Polyisocyanate enthalten sind, worin R Wasserstoff oder gleiche oder verschiedene Alkyl-, Cycloalkylreste mit 1 bis 10 C-Atomen, Aralkyl oder Arylreste bedeuten, und wobei bei einem OH:NCO-Verhältnis von 1:0,1 bis 1:1, vorzugsweise 1:0,3 bis 1:1, der Gehalt an cyclischem Amidin in gebundener Form 2 bis 9 Massen-%, vorzugsweise 3 bis 8 Massen-%, bezogen auf das eingesetzte Epoxidharz, beträgt, und der Härter pro NCO-Gruppe 0,9 bis 0,3 Mole inerte Blockierungsmittel und 0,1 bis 0,6 Mole cyclische Amidine enthält.

Gegenstand der Erfindung ist auch ein Verfahren zur Herstellung pulverförmiger Verbindungen auf Basis von 1,2 Epoxidverbindungen und Härtungsmitteln, dadurch gekennzeichnet, daß Epoxidharze mit mehr als einer 1,2 Epoxidgruppe sowie einer oder mehreren Hydroxylgruppen im Molekül mit Härtungsmitteln, die inerte Blockierungsmittel und cyclische Amidine (Imidazolinen) der allgemeinen Formel I und/oder II 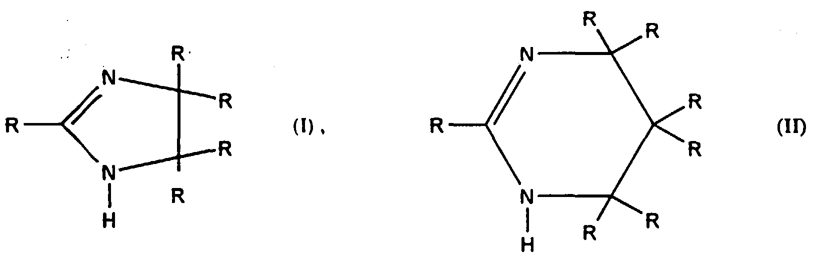 blockierte Polyisocyanate enthalten, worin R Wasserstoff oder gleiche oder verschiedene Alkyl-, Cycloalkylreste mit 1 bis 10 C-Atomen, Aralkyl oder Arylreste bedeuten, und wobei bei einem OH:NCO-Verhältnis von 1:0,1 bis 1:1, vorzugsweise 1:0,3 bis 1:1, der Gehalt an cyclischem Amidin in gebundener Form 2 bis 9 Massen-%, vorzugsweise 3 bis 8 Massen-%, bezogen auf das eingesetzte Epoxidharz, beträgt, und der Härter pro NCO-Gruppe 0,9 bis 0,3 Mole inerte Blockierungsmittel und 0,1 bis 0,6 Mole cyclisches Amidin enthält, bei Temperaturen von 130 bis 230 °C zur Reaktion kommen.

Gegenstand der Erfindung ist schließlich auch die Verwendung der erfindungsgemäßen pulverförmigen Verbindungen als einkomponentige Klebstoffe.

Bei den erfindungsgemäßen blockierten Polyisocyanaten (Härter) zugrundeliegenden Polyisocyanaten, die zur Blockierung mit den cyclischen Amidinen und anderen inerten Blockierungsmitteln eingesetzt werden können, handelt es sich um beliebige Polyisocyanate der Polyurethanchemie mit aliphatisch, cycloaliphatisch und/oder aromatisch gebundenen Isocyanatgruppen. Beispielsweise werden solche Polyisocyanate, insbesondere Diisocyanate im Houben-Weyl, Methoden der organischen Chemie, Bd. 14/2, S. 61 bis 70 oder in Liebigs Annalen der Chemie 562, S 75 bis 136 beschrieben. Besonders bevorzugt werden in der Regel die technisch leicht zugänglichen aliphatischen, und (cyclo)aliphatischen Diisocyanate, wie 1,6-Diisocyanatohexan (HDI), 2,2,4- bzw. 2,4,4-Trimethyl-diisocyanatohexan (TMDI), 1-Isocyanato-3,5,5-trimethyl-3-isocyanatomethylcyclohexan (Isophorondiisocyanat, abgekürzt IPDI), 3-Methyl-1,5-diisocyanatopentan (MPDI) und 4,4'-Diisocyanatocyclohexylmethan (HMDI).

Unter Polyisocyanate im Sinne der vorliegenden Erfindung werden insbesondere auch solche verstanden, die vor der Blockierung einer Umsetzung zur Molekülvergrößerung mit den in der Isocyanatchemie gebräuchlichen Kettenverlängerungsmitteln, wie Wasser, Polyolen und Polyaminen, unterworfen wurden. Dabei wurde das Kettenverlängerungsmittel in unterschüssiger Menge zum Diisocyanat eingesetzt, d. h. das Reaktionsprodukt enthielt im Durchschnitt mindestens zwei NCO-Gruppen.

Geeignete Polyole werden in der DE-OS 27 38 270, S. 10 beschrieben. So sind z.B. die Diole Ethylenglykol, Propandiol-(1,2) und -(1,3), 2,2-Dimethylpropandiol-(1,3), Butandiol-(1,4), Hexandiol-(1,6), 2,2,4-Trimethylhexandiol-(1,6), 2,4,4-Trimethylhexandiol-(1,6), Heptandiol-(1,7), Dodecandiol-(1,12), Octadecen-9,10-diol-(1,12), Thiodiglykol, Octadecandiol-(1,18), 2,4-Dimethyl-2-propylheptandiol-(1,3), Butendiol-(1,4), Butindiol-(1,4), Diethylenglykol, Triethylenglykol, Tetraethylenglykol, trans- und cis-1,4-Cyclohexandimethanol, die Triole Glycerin, Hexantriol-(1,2,6), 1,1,1-Trimethylolpropan und 1,1,1-Trimethylolethan und das Tetraol Pentaerythrit geeignet. Es können auch Mischungen der Vorgenannten Verbindungen verwendet werden.

Besonders geeignet sind die Polyole Ethylenglykol, Dodecandiol-(1,12) und 1,1,1-Trimethylolpropan.

Von den für die Kettenverlängerung geeigneten Polyaminen sollen beispielsweise das Ethylendiamin-1,2, Propylendiamin-1,2, Propylendiamin-1,3, Butylendiamin-1,2, Butylendiamin-1,3, Butylendiamin-1,4 sowie die Hexamethylendiamine, die auch einen oder mehrere C₁ - C₄ Alkylreste tragen können. Des weiteren können auch disekundäre Diamine, wie sie z. B. in bekannter Weise aus den entsprechenden diprimären Diaminen durch Reaktion mit einer Carbonylverbindung, wie z. B. einem Keton oder Aldehyd, und nachfolgender Hydrierung oder durch Addition von diprimären Diaminen an Acrylsäureester gewonnen werden, eingesetzt werden.

Aber auch eine Molekülvergrößerung der beispielhaft genannten Polyisocyanate, vor allem der einfachen Diisocyanate, insbesondere jene mit aliphatisch und/oder (cyclo)aliphatisch gebundenen Isocyanatgruppen, durch Dimerisierung, Trimerisierung, Carbodiimidisierung und Allophanatbildung sowie Biuretisierung, wie sie z.B. in der DE-OS 29 29 150 beschrieben wird, ist sehr vorteilhaft

Besonders bevorzugt werden als Ausgangsmaterial zur Durchführung des erfindungsgemäßen Verfahrens Isocyanuratgruppen aufweisende Derivate des 1,6-Diisocyanatohexans (HDI), 2,2,4- bzw. 2,4,4-Trimethyldiisocyanatohexans (TMDI), 1-Isocyanato-3,5,5-trimethyl-3-isocyanatomethylcyclohexans (IPDI) und 3-Methyl-1,5-diisocyanatopentans (MPDI).

Die zur Herstellung der erfindungsgemäßen Härter geeigneten cyclischen Amidine werden in den DE-OSS 22 48 776 und 28 35 029, sowie in Beilstein, Handbook of Organic Chemistry, 23/3, V. S. 364 f (1991) im allgemeinen und insbesondere auf den Seiten 401 - 405 (Sechsringe), beschrieben. Auch Mischungen sind verwendbar.

Besonders geeignet sind 2-Phenylimidazolin, 2-Phenyl-4-methylimidazolin, 2,4-Dimethylimidazolin und 2-Methyl-1,4,5,6-tetrahydro-pyrimidin.

Zu den zur Blockierung der Polyisocyanate prinzipiell einsetzbaren inerten Blockierungsmittel zählen z. B. Phenole wie z. B. Phenol und p-Chlorphenol, Alkohole wie z. B. Benzylalkohol, Oxime wie z. B. Acetonoxim, Methylethylketoxim, Cyclopentanonoxim, Cyclohexanonoxim, Methylisobutylketoxim, Methyl-tert.-butylketoxim, Düsopropylketoxim, Diisobutylketoxim, Acetophenonoxim, N-Hydroxyverbindungen wie z. B. N-Hydroxysuccinimid und Hydroxypyridine, Lactame wie z. B. ε-Caprolactam, CH-acide Verbindungen wie z. B. Acetessigsäureester und Malonsäureester, Amine wie z. B. Diisoproylamin, heterocyclische Verbindungen mit mindestens einem Heteroatom wie z. B. Mercaptane, Piperidine, Piperazine, Pyrazole, Imidazole, Triazole und Tetrazole, α-Hydroxysäureester wie z. B. Glykolsäureester und Hydroxamsäureester wie z. B. Benzylmethacrylohydroxamat. Eine Zusammenstellung findet sich z. B. bei Zeno W. Wicks, Jr., Progress in Organic Coatings 3 (1975) 73-79, 9 (1981) 3-28.

Als inerte Blockierungsmittel besonders geeignet sind Acetonoxim, Methylethylketoxim und Acetophenonoxim, Acetessigsäureethylester, Malonsäurediethylester, Diisopropylamin, Dimethylpyrazol, 1,2,4-Triazol und Benzylmethacrylohydroxamat.

Ganz besonders bevorzugt ist das Acetophenonoxim.

Selbstverständlich können auch Mischungen dieser inerten Blockierungsmittel eingesetzt werden.

Die erfindungsgemäßen als Härter verwendeten Polyisocyanate, die mit den cyclischen Amidinen der beschriebenen allgemeinen Formel und inerten Blockierungsmitteln blockiert sind, können durch Umsetzung der Komponenten bei Temperaturen von 20 bis 110 °C, vorzugsweise bei 40 bis 80 °C, hergestellt werden. Dabei werden die Polyisocyanate, die cyclischen Amidine und die inerten Blockierungsmittel in solchen Mengen eingesetzt, daß auf eine NCO-Gruppe 0,9 bis 0,3 Mole inerte Blockierungsmittel und 0,1 bis 0,6 Mole cyclisches Amidin kommen. In der Regel wird die Umsetzung in einem inerten Lösungsmittel wie z. B. aromatischen Kohlenwasserstoffen, Estern oder Ketonen, durchgeführt. Besonders vorteilhaft hat sich Aceton als Lösungsmittel erwiesen. Es kann aber auch in der Schmelze gearbeitet werden. Die Blockierung des Polyisocyanates erfolgt in Analogie zu der in der DE 27 29 704 beschriebenen Herstellung von blockierten Polyisocyanaten.

Werden Kettenverlängerer eingesetzt, wird zu einer Lösung des Polyisocyanates in einem inerten Lösungsmittel ein Polyol und/oder Polyamin der genannten Art bei 20 bis 110 °C, vorzugsweise 40 bis 80 °C zugegeben und so lange bei dieser Temperatur weiter erhitzt, bis pro eingesetztes reaktives Wasserstoffatom des Kettenverlängerers eine NCO-Gruppe zur Umsetzung gebracht worden ist. Zur Beschleunigung der Reaktion der Polyisocyanate mit Polyolen können vorteilhaft Katalysatoren, wie z. B. Metallsalze und/oder Metallkomplexe in Mengen von ca. 0,01 bis 2,0 Massen-%, besonders 0,02 bis 0,5 Massen-%, bezogen auf das Gewicht der härtbaren Zusammensetzung, eingesetzt werden. Als Katalysator besonders geeignet ist das Dibutylzinndilaurat (DBTL). Bei der Umsetzung des Polyisocyanates mit einem Polyamin ist in der Regel die Zugabe eines Katalysators nicht erforderlich.

Zur Herstellung der erfindungsgemäßen Verbindungen wird nun das Reaktionsprodukt der 1. Stufe - die Lösung des kettenverlängerten Polyisocyanates - in einem nächsten Reaktionsschritt mit den inerten Blockierungsmitteln und dem cyclischen Amidin bei der unveränderten Temperatur umgesetzt Dabei werden die beiden Verbindungen portionsweise zu der Lösung des kettenverlängerten Polyisocyanates gegeben. Nach Beendigung der Zugabe wird bis zur Vervollständigung der Reaktion weiter erhitzt. Danach erfolgt die Entfernung des Lösemittels durch Destillation im Vakuum.

Die erfindungsgemäßen Härter sind mit den OH-gruppenhaltigen EP-Harzen verträglich. Die Epoxidharz/Härter-Gemische eignen sich in exzellenter Weise zur Herstellung von Verklebungen bei Temperaturen von 130 bis 230 °C innerhalb von 45 bis 5 Minuten mit verbesserter Zugfestigkeit bei erhöhten Temperaturen.

Zur Herstellung der erfindungsgemäßen Gemische sind Epoxidverbindungen mit einer oder mehreren Hydroxylgruppen im Molekül geeignet. Dies sind Epoxidharze, die durch Reaktion von Bisphenol A und Epichlorhydrin im Molverhältnis (n):(n+1) mit n:2-9 erhalten werden. Besonders geeignet sind Epoxidharze mit einem Epoxidäquivalentgewicht von ca. 800 bis 3500 und einem OH-Äquivalentgewicht von 300 bis 250.

Gegebenenfalls können auch weitere Epoxidverbindungen eingesetzt werden, wie z. B. polyfünktionelle urethangruppenhaltige Epoxide. Möglich ist auch der Einsatz von OH-und/oder NH-Gruppen aufweisenden Oligomeren oder Polymeren, wie z. B. Polyolpolyacrylaten, zur Steigerung der Flexibilität des Klebstoffsystems.

Bei der Herstellung der erfindungsgemäßen Klebstoffe können erforderlichenfalls mit im Beschichtungssektor üblichen Zusätzen, wie Haftvermittler, Verlaufsmittel, Füllstoffe, Pigmente, Farbstoffe, UV- und Oxidationsstabilisatoren Verwendung finden.

Die Herstellung der erfindungsgemäßen Klebstofformulierungen erfolgt so, daß die einzelnen Komponenten (EP-Harz, mit Blockierungsmittel und cyclischen Amidinen maskiertes gegebenenfalls kettenverlängertes Polyisocyanat sowie gegebenenfalls Zusätze) entweder in einem inerten Lösemittel homogenisiert oder gemahlt, gemischt und bei 80 bis 150 °C extrudiert oder bei 80 bis 130 °C geknetet werden. Nach dem Homogenisieren im Lösemittel wird das Lösemittel destillativ im Vakuum entfernt. Die auf Raumtemperatur befindliche homogenisierte Mischung, nach einem der o. a. Verfahren dargestellt, wird nun mit einer Mühle kleiner 500 µm gemahlen. Bei der Herstellung des Bindemittelgemisches muß darauf geachtet werden, daß der cyclische Amidingehalt (in blockierter Form) 2 bei 8 Massen-%, vorzugsweise 3 bis 6 Massen-%, bezogen auf die Summe aus Harz und Härter, beträgt. Der Härteranteil muß also so gewählt werden, daß sein cyclischer Amidingehalt zur katalytischen Härtung des EP-Harzes ausreicht (Polymerisation der Epoxidgruppen), ohne daß die OH-Gruppen reagieren. Gleichzeitig wird eine Vernetzung des Epoxidharzes durch Reaktion der OH-Gruppen des Harzes mit den bei der Härtungstemperatur deblockierten Isocyanatgruppen des Härters erreicht. Bei dieser Urethanreaktion bleiben allerdings die EP-Gruppen intakt.

Die Applikation des einkomponentigen Klebstoffes auf die zu verklebenden Substrate kann z. B. durch elektrostatisches Pulverspritzen, Wirbelsintern, elektrostatisches Wirbelsintern, Anschmelzen oder Aufsieben erfolgen. Nachdem die gereinigte Oberfläche des einen Fügeteils mit dem erfindungsgemäßen Klebstoffsystem beschichtet und das andere zu verklebende Fügeteil aufgelegt ist, wird die Verklebung z.B. mit geeigneten Werkzeugen oder einem Gewicht fixiert. Die Aushärtung erfolgt bei 130 bis 230 °C innerhalb von 45 bis 5 Minuten.

Das erfindungsgemäße Verfahren kann Verwendung finden zum Verkleben verschiedenster Werkstoffe, z. B. Metalle, Leichtmetalle, aber auch nichtmetallischer Werkstoffe wie Glas, Keramik oder Kunststoff.

Die nach dem erfindungsgemäßen Verfahren hergestellten Metallverklebungen unterscheiden sich deutlich von den zur Zeit auf dem Markt befindlichen einkomponentigen Metallklebstoffen auf Epoxidbasis hinsichtlich ihrer Temperaturbelastbarkeit nach dem Zugscherversuch (DIN EN 1465). Darüber hinaus zeichnen sich die erfindungsgemäßen pulverförmigen Beschichtungen durch eine hervorragende Lösemittelbeständigkeit gegenüber aggressiven Lösemitteln, wie z. B. Methylethylketon, aus.

### A Allgemeine Herstellungsvorschriften der erfindungsgemäßen Härter

### Beispiel A) 1

Zu einer ca. 65%igen acetonischen Lösung des Isocyanurates des 1-Isocyanato-3,5,5-trimethyl-3-isocyanatomethylcyclohexans, die 0,1 Massen-% Dibutylzinndilaurat enthält, werden bei ca. 60 °C Octadecanol-1, Acetophenonoxim und cyclisches Amidin portionsweise zugegeben. Nach erfolgter Zugabe aller aktiven Wasserstoff enthaltenden Verbindungen wird so lange bei ca. 60 °C weiter erhitzt , bis der NCO-Gehalt auf < 0,5 % gesunken ist. Anschließend wird das Aceton im Vakuum abdestilliert.

Die Umsetzung des Isocyanurates des 1-Isocyanato-3,5,5-trimethyl-3-isocyanatomethylcyclohexans mit Acetophenonoxim und cyclischem Amidin im Beispiel A) 2 erfolgt analog dem im Beispiel A) 1 beschriebenen Verfahren.

### Beispiel A) 3

Zu einer ca. 65%igen acetonischen Lösung von 2 mol des Isocyanurates des 1-Isocyanato-3,5,5-trimethyl-3-isocyanatomethylcyclohexans, die 0,1 Massen-% Dibutylzinndilaurat enthält, wird bei ca. 60°C 1 mol Ethylenglykol innerhalb von ca. 10 Minuten unter Rühren zudosiert und so lange bei dieser Temperatur weiter erhitzt, bis pro eingesetztes OH-Äquivalent ein NCO-Äquivalent umgesetzt ist. Danach werden 2,7 mol Acetophenonoxim und 1,3 mol cyclisches Amidin portionsweise zugegeben. Nach erfolgter Zugabe wird so lange bei ca. 60 °C weiter erhitzt, bis der NCO-Gehalt auf < 0,5 % gesunken ist. Anschließend wird das Aceton im Vakuum abdestilliert.

Die Herstellung weiterer Härter in den Beispielen A) 4-6 erfolgt analog dem im Beispiel 3 beschriebenen Verfahren. Bei der Umsetzung des Polyisocyanates mit dem Polyamin in Beispiel A) 5 ist eine Zugabe eines Katalysators nicht unbedingt erforderlich.

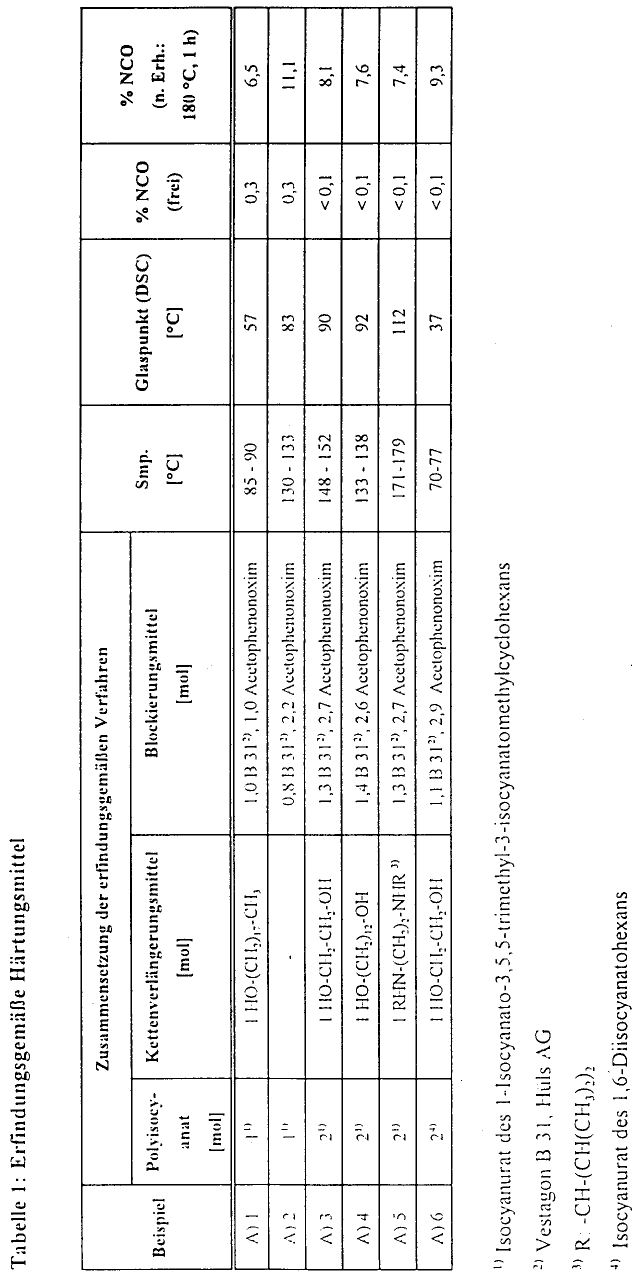

### B Epoxidharz

In den nachstehenden Klebstoffbeispielen wird ein festes Epoxidharz des Typs Diglycidylether des Bisphenol A - Umsetzungsprodukt aus Bisphenol A und Epichlorhydrin - verwendet. Nach Angaben des Herstellers weist es ein Epoxid-Äquivalentgewicht von 850 - 940, einen Epoxidwert von 0,106 - 0,118, einen Hydroxylwert von 0,33 und einen Schmelzpunkt von 80 - 100 °C auf

### C Epoxidharz-Pulverklebstoffe

### Allgemeine Herstellung der erfindungsgemäßen Klebstoffe in Lösung

Der Härter und das Epoxidharz werden gegebenenfalls mit Zusatzstoffen wie z. B. Hydroxyacrylate in einem inerten Lösemittel wie z. B. Aceton gelöst. Nach dem Erhalt einer homogenen und klaren Lösung wird das Lösemittel im Vakuum entfernt, der Feststoff zerkleinert und in einer Mühle auf eine Korngröße < 500 µm gemahlen. Es schließt sich eine Nachtrocknung der Substanz bis zur Gewichtskonstanz an.

### Allgemeine Herstellung der erfindungsgemäßen Klebstoffe in der Schmelze

Die Produkte - Härter und Epoxidharz - werden gegebenenfalls mit den o. a. Zusatzstoffen in einem Plastographen bei 80 - 130 °C geknetet. Das abgekühlte Feststoffgemisch wird nachfolgend auf eine Korngröße < 500 µm gemahlen.

Bei einer Homogenisierung im Extruder werden die gemahlenen Produkte zunächst in einem Kollergang trocken vermischt und anschließend bei 80 - 150 °C extrudiert. Nach dem Erkalten wird das Extrudat gebrochen und auf einer Mühle auf eine Korngröße < 500 µm gemahlen.

### Applikation der erfindugsgemäßen Klebstoffe

Die erfindungsgemäßen Klebstofformulierungen werden auf die entfetteten und aufgerauhten Normalstahlbleche (ST 1405) über ein 100 µm Sieb aufgebracht. Alternativen dazu stellen das elektrostatische Pulverspritzen der auf eine Korngröße von < 100 µm gemahlenen Klebstoffe und die Applikation aus der Schmelze dar.

Die Verklebungen werden nach der DIN EN 1465 durchgeführt. Die Zugscherfestigkeiten dieser bei unterschiedlichen Temperaturen in einem Labor-Umlufttrockerschrank gehärteten Metallverklebungen sind in der Tabelle 2 aufgeführt.

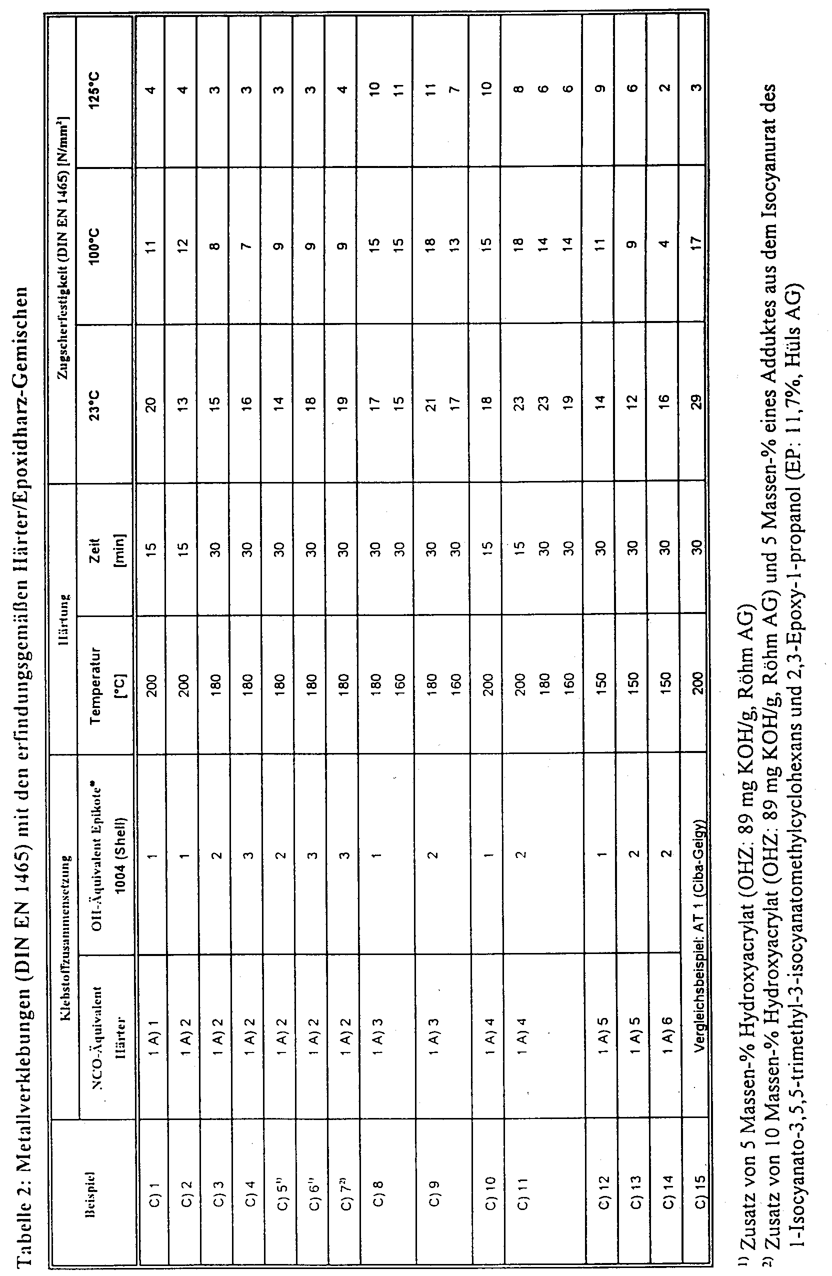

## Patentansprüche

1. Pulverförmige Verbindungen mit ausgezeichneter Temperatur- und Lösemittelbeständigkeit auf der Basis von 1,2-Epoxidverbindungen mit mehr als einer 1,2-Epoxidgruppe und einer oder mehreren Hydroxylgruppen im Molekül, Härtungsmitteln und die in der Klebstofftechnologie üblichen Hilfs- und Zusatzmittel,
dadurch gekennzeichnet,
daß als Härtungsmittel mit inerten Blockierungsmitteln und cyclischen Amidinen der allgemeinen Formel I und/oder II 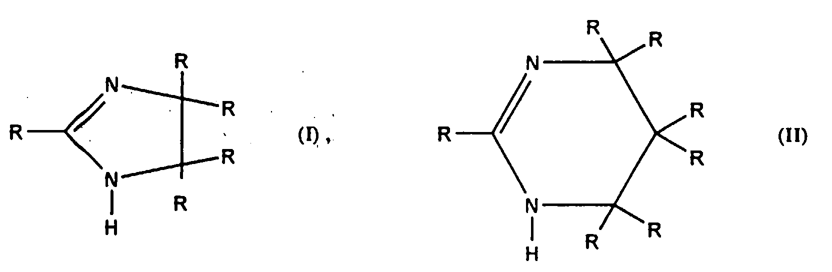 blockierte Polyisocyanate enthalten sind, worin R Wasserstoff oder gleiche oder verschiedene Alkyl-, Cycloalkylreste mit 1 bis 10 C-Atomen, Aralkyl oder Arylreste bedeuten, und wobei bei einem OH:NCO-Verhältnis von 1:0,1 bis 1:1, vorzugsweise 1:0,3 bis 1:1, der Gehalt an cyclischem Amidin in gebundener Form 2 bis 9 Massen-%, vorzugsweise 3 bis 8 Massen-%, bezogen auf das eingesetzte Epoxidharz, beträgt, und der Härter pro NCO-Gruppe 0,9 bis 0,3 Mole inerte Blockierungsmittel und 0,1 bis 0,6 Mole cyclische Amidine enthält.

2. Pulverförmige Verbindungen nach Anspruch 1,
dadurch gekennzeichnet,
daß das OH:NCO-Verhältnis von 1:0,3 bis 1:1, der Gehalt an cyclischem Amidin in gebundener Form 3 bis 8 Massen-%, bezogen auf das eingesetzte Epoxidharz, beträgt.

3. Pulverförmige Verbindungen nach den Ansprüchen 1 bis 2,
dadurch gekennzeichnet,
daß als Epoxidharze solche 1,2-Epoxidverbindungen enthalten sind, die durch Reaktion von Bisphenol A und Epichlorhydrin im Molverhältnis (n):(n+1) mit n:2-9 erhalten werden.

4. Pulverförmige Verbindungen nach den Ansprüchen 1 bis 3,
dadurch gekennzeichnet,
daß inerte Blockierungsmittel ausgewählt aus Acetonoxim, Methylethylketoxim und Acetophenonoxim, Acetessigsäureethylester, Malonsäurediethylester, Diisopropylamin, Dimethylpyrazol, 1,2,4-Triazol und Benzylmethacrylohydroxamat, enthalten sind.

5. Pulverförmige Verbindungen nach den Ansprüchen 1 bis 4,
dadurch gekennzeichnet,
daß das inerte Blockierungsmittel Acetophenonoxim ist.

6. Pulverförmige Verbindungen nach den Ansprüchen 1 bis 5,
dadurch gekennzeichnet,
daß Reste von (cyclo)aliphatischen Diisocyanaten ausgewählt aus 1,6-Diisocyanatohexan (HDI), 2,2,4- bzw. 2,4,4-Trimethyl-diisocyanatohexan (TMDI), 1-Isocyanato-3,5,5-trimethyl-3-isocyanatomethylcyclohexan (Isophorondiisocyanat, abgekürzt IPDI), 3-Methyl-1,5-diisocyanatopentan (MPDI) und 4,4'-Diisocyanatocyclohexylmethan (HMDI), enthalten sind.

7. Pulverförmige Verbindungen nach den Ansprüchen 1 bis 6,
dadurch gekennzeichnet,
daß zur Kettenverlängerung Wasser, Polyole und/oder Polyamine eingesetzt werden.

8. Pulverförmige Verbindungen nach den Ansprüchen 1 bis 7,
dadurch gekennzeichnet,
daß die Kettenverlängerung vor Blockierung durch Dimerisierung, Trimerisierung, Carbodiimidisierung und Allophanatbildung sowie Biuretisierung erfolgt.

9. Pulverförmige Verbindungen nach den Ansprüchen 1 bis 8,
dadurch gekennzeichnet,
daß zur Blockierung der Härtungsmittel 2-Phenylimidazolin, 2-Phenyl-2-methylimidazolin sowie 2,4-Dimethylimidazolin eingesetzt werden.

10. Verfahren zur Herstellung pulverförmiger Verbindungen auf Basis von 1,2 Epoxidverbindungen und Härtungsmitteln,
dadurch gekennzeichnet,
daß Epoxidharze mit mehr als einer 1,2 Epoxidgruppe sowie einer oder mehreren Hydroxylgruppen im Molekül mit Härtungsmitteln, die inerte Blockierungsmittel und cyclische Amidine (Imidazolinen) der allgemeinen Formel I und/oder II 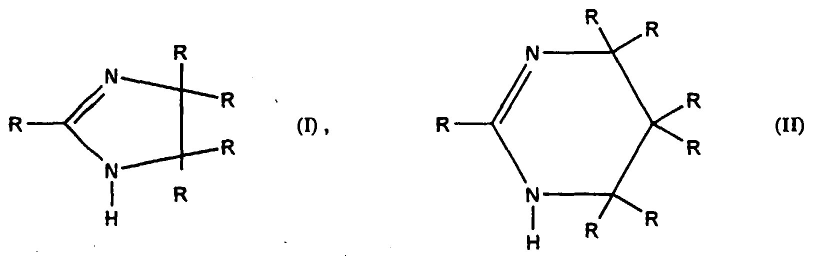 blockierte Polyisocyanate enthalten, worin R Wasserstoff oder gleiche oder verschiedene Alkyl-, Cycloalkylreste mit 1 bis 10 C-Atomen, Aralkyl oder Arylreste bedeuten, und wobei bei einem OH:NCO-Verhältnis von 1:0,1 bis 1:1, vorzugsweise 1:0,3 bis 1:1, der Gehalt an cyclischem Amidin in gebundener Form 2 bis 9 Massen-%, vorzugsweise 3 bis 8 Massen-%, bezogen auf das eingesetzte Epoxidharz, beträgt, und der Härter pro NCO-Gruppe 0,9 bis 0,3 Mole inerte Blockierungsmittel und 0,1 bis 0,6 Mole cyclisches Amidin enthält, bei Temperaturen von 130 bis 230 °C zur Reaktion kommen.

11. Verwendung der pulverförmigen Überzugsmittel als einkomponentige Klebstoffe.
